# DEMANDE DE BREVET EUROPEEN

(11) **EP 1 944 943 A1**
(43) Date de publication de la demande: **16.07.2008**
(21) Numéro de dépôt: 08100192.7
(22) Date de dépôt: 08.01.2008
(51) Int. Cl.: H04L 29/06

(54) **Procédé d'établissement de communication entre terminaux sur un méduim choisi par l'appele, et dispositifs d'aide associés**

(30) Priorité: 09.01.2007 FR 0752583
(71) Demandeur: Alcatel Lucent, 75008 Paris (FR)
(72) Inventeur: Litteaut, Jacques, 78160, MARLY LE ROI (FR); Coulon, Stéphane, ARRONVILLE, 95810 (FR)
(74) Mandataire: Sciaux, Edmond

(57) **Abrégé**

Un procédé, dédié à l'établissement d'une communication entre des terminaux de communication d'appelant (T1) et d'appelé (T2), consiste à générer dans un terminal (T1) d'un appelant un message de demande d'établissement d'une communication avec un appelé, puis à transmettre ce message à destination de l'appelé afin que le terminal (T1) de l'appelant et un terminal (T2) de l'appelé s'accordent sur des paramètres de communication permettant d'établir une communication sur au moins un médium. Ce message fait l'objet de l'intégration d'un ensemble de données qui définissent un groupe de média que le terminal (T1) de l'appelant est en mesure d'utiliser pour la communication qu'il souhaite établir. Par ailleurs, lorsque le terminal (T2) de l'appelé reçoit le message, il affiche sur son écran (EC) les identifiants de certains au moins des média du groupe qui est défini par l'ensemble de données, afin que l'appelé puisse sélectionner l'un au moins de ces identifiants puis que les terminaux de l'appelant (T1) et de l'appelé (T2) s'accordent sur des paramètres de communication leur permettant d'établir une communication sur chaque médium dont l'identifiant a été sélectionné. On suspend l'établissement de la communication jusqu'à ce que l' appelé ait procédé à cette sélection et que les terminaux de l'appelant (T1) et de l'appelé (T2) se soient accordés sur des paramètres de communication permettant d'établir une communication sur chaque médium dont l'identifiant a été sélectionné.

## Description

L'invention concerne les réseaux de communication dans lesquels des communications peuvent être établies via plusieurs média, et plus précisément l'établissement de communications entre des utilisateurs de terminaux de communication connectés à de tels réseaux.

On entend ici par « terminal de communication » tout type d'équipement de communication fixe ou mobile (ou portable, ou encore cellulaire) capable de communiquer de façon bidirectionnelle avec un autre équipement de communication, via une liaison filaire et/ou par voie d'ondes (éventuellement satellitaire) établie dans au moins un réseau de communication. Il pourra par exemple s'agir d'un téléphone fixe ou mobile (ou cellulaire), d'un assistant personnel numérique (ou PDA) ou d'un ordinateur fixe ou portable, ou encore de tout type d'appareil capable d'accueillir une application de communication.

Par ailleurs, on entend ici par « médium » tout type de support de communication, et notamment le médium audio (pour les communications téléphoniques filaires ou par voie d'ondes classiques), le médium vidéo (pour les applications vidéo), le médium audio/vidéo (pour les applications vidéo ou audio et vidéo), le médium de messagerie instantanée (ou « Instant Messaging », ou encore « chat » - pour les applications de messagerie en temps réel), ou le médium de données (ou « data » - pour les applications de transfert de données (messages électroniques (Intranet et Internet) et/ou fichiers), ou pour le partage d'applications ou de documents).

Comme le sait l'homme de l'art, dans les réseaux de communication actuels les communications (ou appels) sont traité(e)s par type : un appel de type audio initié par un terminal appelant demande une réponse de type audio de la part du terminal appelé, ou un appel de type messagerie instantanée initié par un terminal appelant demande une réponse de type messagerie instantanée de la part du terminal appelé. Or, lorsqu'un terminal appelé reçoit une demande d'établissement de communication sur un médium donné, il peut ne pas être en mesure de répondre sur ce médium, soit parce qu'il n'est pas adapté à cet effet, soit parce que l'application qui gère ce médium est déjà utilisée pour une autre communication, soit encore parce que son utilisateur souhaite répondre via un autre médium.

Le document US 200410125756 décrit un dispositif d'aide à l'établissement d'une communication entre un des terminaux de communication d'un usager dit appelant et un des terminaux d'un usager dit appelé. Ce dispositif comprend des premiers moyens de traitement agencés pour:
- déterminer les média que les terminaux de l'appelant sont capables d'utiliser ;
- générer un message de signalisation lorsqu'un terminal de l'appelant demande d'établissement d'une communication ;
- et pour intégrer dans ce message de signalisation un ensemble de données définissant un premier groupe de média que les terminaux de l'appelant sont capables d'utiliser au moment de cette demande d'établissement de communication.

Ce dispositif comporte des seconds moyens de traitement agencés pour:
- déterminer un second groupe de média que les terminaux de l'appelé sont capables d'utiliser ;
- recevoir un tel message de signalisation émis par les premiers moyens de traitement ;
- puis sélectionner automatiquement un medium appartenant au premier et au second groupe de media ;
- et enfin établir une communication sur le medium ainsi sélectionné.

Ce dispositif connu a pour inconvénient de gérer des médias et leurs capacités, sans laisser à l'appelé la possibilité d'intervenir dans le choix du médium, et sans tenir compte de l'occupation éventuelle d'un des terminaux de l'appelant, par une autre communication. Il peut arriver qu'un terminal de l'appelé soit capable d'utiliser un médium donné, mais qu'il soit occupé par une autre communication déjà établie au moment de la présente demande d'établissement de communication. Dans ce cas, le terminal n'est pas en mesure d'utiliser effectivement ce médium, par conséquent l'établissement d'une nouvelle communication via ce terminal est vouée à l'échec.

L'invention a donc pour but de permettre à l'utilisateur d'un terminal appelé de choisir, lui-même, le médium de communication sur lequel il souhaite communiquer avec un terminal appelant ; et lui permettre de choisir uniquement parmi les media effectivement disponibles pour l'appelant au moment de la demande d'établissement de communication.

Elle propose à cet effet un procédé d'établissement d'une communication entre des terminaux de communication d'un appelant et d'un appelé, ledit procédé consistant à générer dans un terminal d'un appelant un message de demande d'établissement d'une communication avec un appelé, en intégrant dans ledit message un ensemble de données définissant un groupe de média que l'appelant peut utiliser au moment de cette demande d'établissement de communication,
puis à transmettre ce message à destination dudit appelé afin qu'un terminal de l'appelant et un terminal dudit appelé s'accordent sur des paramètres de communication permettant d'établir une communication sur au moins un médium, caractérisé
- en ce que l'on intègre dans ledit message de demande d'établissement des données correspondant seulement à des média que l'appelant est en mesure d'utiliser au moment de cette demande d'établissement de communication,
- en ce qu'à réception dudit message un terminal de l'appelé affiche sur un écran des identifiants de certains au moins des média du groupe défini par ledit ensemble de données,
- en ce que ledit appelé procède à la sélection de l'un au moins desdits identifiants,
- et en ce qu'on suspend l'établissement de ladite communication jusqu'à ce que ledit appelé ait procédé à cette sélection et qu'un terminal de l'appelant et un terminal de l'appelé se soient accordés sur des paramètres de communication permettant d'établir une communication sur chaque médium dont l'identifiant a été sélectionné.

Le procédé ainsi caractérisé permet à l'appelé de choisir le médium qu'il préfère, parce que toutes les possibilités lui sont présentées, tout en limitant son choix pour tenir compte de l'occupation éventuelle d'un des terminaux de l'appelant, par une autre communication déjà établie, et parce que l'établissement de la communication est suspendue pour lui laisser le temps de faire ce choix.

Le procédé selon l'invention peut comporter d'autres caractéristiques qui peuvent être prises séparément ou en combinaison, et notamment :
- on peut mettre à jour le groupe de média qu'un terminal de l'appelant est en mesure d'utiliser, juste avant d'intégrer, dans le message de demande d'établissement, l'ensemble de données définissant le groupe mis à jour ;
- on peut déterminer les média que l'appelé est en mesure d'utiliser pour la communication à établir, et lui signaler sur un écran les identifiants des média qu'il est en mesure d'utiliser, parmi ceux du groupe défini par l'ensemble de données qui est contenu dans le message de demande d'établissement ;
- on peut intégrer dans le message de demande d'établissement un ensemble de données agencé sous la forme d'un fichier de type XML ;
- on peut intégrer l'ensemble de données en l'encapsulant dans des données qui identifient un terminal de l'appelant et qui sont contenues dans le message de demande d'établissement ;
- on peut intégrer un ensemble de données comprenant des instructions qui définissent une phrase ou un espace destiné(e) à être affiché(e) sur l'écran d'un terminal de l'appelé (auquel est transmise la demande d'établissement) et qui invite l'appelé à fournir au moins une réponse en mode texte au terminal de l'appelant;
- en cas de fourniture d'une réponse signalant l'impossibilité d'établir la communication demandée, la réponse est transmise à un terminal de l'appelant et la communication n'est pas établie.

L'invention propose également un premier dispositif d'aide à l'établissement d'une communication entre des terminaux de communication d'un appelant et d'un appelé, comprenant des premiers moyens de traitement pour intégrer dans un message de demande d'établissement de communication un ensemble de données définissant un groupe de média que l'appelant peut utiliser pour l'établissement d'une communication entre un terminal de l'appelant et un terminal de l'appelé ;
caractérisé en ce que ces premiers moyens de traitement déterminent ledit ensemble de données au moment de la demande d'établissement de communication, de façon à permettre à l'appelé de sélectionner au moins un médium en limitant son choix aux média effectivement disponibles au moment de la demande d'établissement de communication,

Le premier dispositif selon l'invention peut comporter d'autres caractéristiques qui peuvent être prises séparément ou en combinaison, et notamment :
- ses premiers moyens de traitement peuvent être chargés de mettre à jour le groupe de média que le terminal de l'appelant est en mesure d'utiliser, avant d'intégrer dans le message de demande d'établissement l'ensemble de données qui définit ce groupe mis à jour ;
- ses premiers moyens de traitement peuvent être chargés d'intégrer dans le message de demande d'établissement un ensemble de données agencé sous la forme d'un fichier de type XML ;
- ses premiers moyens de traitement peuvent être chargés d'intégrer l'ensemble de données en l'encapsulant dans des données qui identifient un terminal de l'appelant et qui sont contenues dans le message de demande d'établissement ;
- ses premiers moyens de traitement peuvent être chargés d'intégrer dans le message de demande d'établissement un ensemble de données comprenant des instructions définissant une phrase ou un espace invitant l'appelé à fournir au moins une réponse en mode texte à un terminal de l'appelant.

L'invention propose également un second dispositif d'aide à l'établissement d'une communication entre des terminaux de communication d'un appelant et d'un appelé, comprenant des seconds moyens de traitement agencés pour recevoir un message de demande d'établissement d'une communication, ce message contenant un ensemble de données définissant un groupe de média que l'appelant peut utiliser ;
caractérisé en ce que ces seconds moyens de traitement sont agencés pour:
- déterminer des identifiants de certains au moins des média du groupe défini par ledit ensemble de données,
- puis fournir certains au moins desdits identifiants déterminés à un terminal de l'appelé, afin que ledit appelé sélectionne l'un au moins d'entre eux,
- et suspendre l'établissement de ladite communication jusqu'à ce que ledit appelé ait procédé à cette sélection, et qu'un terminal de l'appelant et un terminal de l'appelé se soient accordés sur des paramètres de communication permettant d'établir une communication sur chaque médium dont l'identifiant a été sélectionné.

Ces seconds moyens de traitement peuvent être chargés de déterminer les média que l'appelé est en mesure d'utiliser pour la communication à établir, parmi ceux du groupe défini par l'ensemble de données contenu dans le message de demande d'établissement.

L'invention propose également un terminal de communication ou un équipement de réseau de communication équipé d'un premier dispositif d'aide à l'établissement de communication et/ou d'un second dispositif d'aide à l'établissement de communication des types de ceux présentés ci-avant.

L'invention est particulièrement bien adaptée, bien que de façon non exclusive, aux réseaux de communication à protocole Internet (ou IP) et aux réseaux de type UMTS (ainsi que les réseaux équivalents et variantes).

D'autres caractéristiques et avantages de l'invention apparaîtront à l'examen de la description détaillée ci-après, et des dessins annexés, sur lesquels :
- la figure 1 illustre de façon très schématique et fonctionnelle deux terminaux de communication connectés à un ensemble de réseaux de communication et comprenant chacun des exemples de réalisation de premier et second dispositifs d'aide à l'établissement de communication selon l'invention,
- la figure 2 illustre de façon très schématique un premier exemple de fenêtre de présentation affichée sur un écran de terminal de communication,
- la figure 3 illustre de façon très schématique un second exemple de fenêtre de présentation affichée sur un écran de terminal de communication,
- la figure 4 illustre de façon très schématique et fonctionnelle un ensemble de réseaux de communication auquel sont connectés trois terminaux de communication comprenant chacun un exemple de réalisation d'un second dispositif d'aide à l'établissement de communication selon l'invention, et un équipement de réseau comprenant un exemple de réalisation d'un premier dispositif d'aide à l'établissement de communication selon l'invention, et
- la figure 5 illustre de façon très schématique et fonctionnelle un ensemble de réseaux de communication auquel sont connectés trois terminaux de communication, et un équipement de réseau comprenant des exemples de réalisation de premier et second dispositifs d'aide à l'établissement de communication selon l'invention.

Les dessins annexés pourront non seulement servir à compléter l'invention, mais aussi contribuer à sa définition, le cas échéant.

L'invention a pour objet de permettre aux utilisateurs de terminaux de communication de choisir les média de communication sur lesquels ils sont respectivement prêts à communiquer lorsqu'ils reçoivent des demandes d'établissement de communication de terminaux de communication d'appelants.

On notera que l'invention concerne principalement les situations dans lesquelles des terminaux d'appelant et d'appelé disposent d'applications internes leur permettant chacun de communiquer au moyen d'au moins deux média différents. Il est rappelé que l'on entend ici par « médium » tout type de support de communication, et notamment le médium audio, le médium vidéo, le médium audio/vidéo, le médium de messagerie instantanée (ou « Instant Messaging », ou encore « chat »), ou le médium de données (ou « data » - pour les applications de transfert de données (messages électroniques (Intranet et Internet) et/ou fichiers), ou de partage d'applications ou de documents).

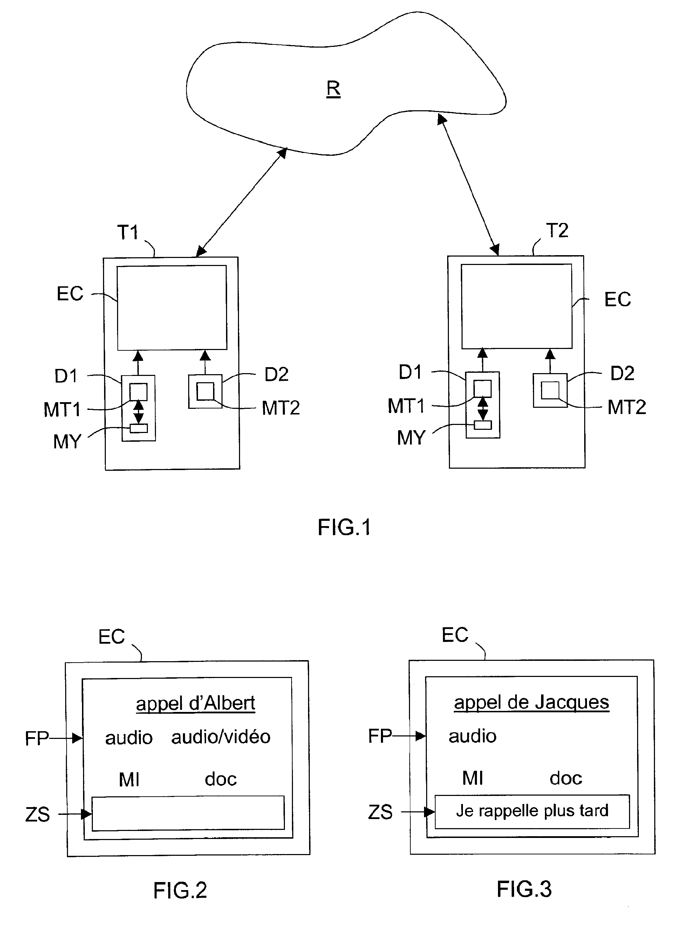

On se réfère tout d'abord à la **figure 1** pour présenter l'invention dans le cadre d'un premier exemple de mise en oeuvre. Cet exemple concerne l'établissement d'une communication entre des terminaux de communication appelant T1 et appelé T2, connectés à un même réseau de communication ou à des réseaux de communication différents. Dans ce qui suit, et comme illustré sur la **figure 1**, on appellera ensemble de réseaux R le ou les réseaux de communication au(x)quel(s) sont connectés les terminaux de communication de l'appelant T1 et de l'appelé T2.

Tout type de terminal de communication est ici concerné, qu'il soit fixe ou mobile (ou portable, ou encore cellulaire), dès lors qu'il est capable de communiquer de façon bidirectionnelle avec un autre terminal (ou équipement) de communication, via une liaison filaire et/ou par voie d'ondes (éventuellement satellitaire) établie dans au moins un réseau de communication. Dans l'exemple non limitatif illustré sur la **figure 1**, on considère que les terminaux de l'appelant T1 et de l'appelé T2 sont des téléphones mobiles (ou cellulaires) connectés à des réseaux d'accès radio de réseau(x) mobile(s) ou cellulaire(s). Mais, chaque terminal peut par exemple être un téléphone fixe ou mobile (ou cellulaire), un assistant personnel numérique (ou PDA) ou un ordinateur fixe ou portable, ou encore tout type d'appareil capable d'accueillir une application de communication.

Le procédé selon l'invention est mis en oeuvre chaque fois qu'un terminal T1 d'un appelant souhaite établir une communication avec un appelé, par exemple parce que son utilisateur (l'appelant) a composé un identifiant de communication de l'appelé. L'identifiant de communication de l'appelé peut être par exemple celui d'un terminal (de communication) T2 qu'il utilise (par exemple un numéro de téléphone), ou une adresse de messagerie de l'appelé.

Le procédé commence tout d'abord par la génération classique par le terminal T1 de l'appelant d'un message de demande d'établissement d'une communication avec un appelé. Puis, il se poursuit par la transmission de ce message à destination de l'appelé, afin que le terminal T1 de l'appelant et un terminal T2 de l'appelé s'accordent sur des paramètres de communication permettant d'établir une communication sur un ou plusieurs media.

Il est rappelé qu'un appelé peut disposer de plusieurs terminaux (de communication), et qu'une demande d'établissement de communication (ou message d'appel) destiné(e) à cet appelé peut être transmise à l'un au moins de ses terminaux. Le choix de chaque terminal de l'appelé, auquel est transmise la demande d'établissement de communication, est généralement assurée par une application de type « soft switch ».

Selon l'invention, on intègre dans le message de demande d'établissement, avant qu'il ne parvienne dans un terminal T2 de l'appelé, un ensemble de données qui définit un groupe de média que le terminal T1 de l'appelant est en mesure d'utiliser pour la communication qu'il souhaite établir.

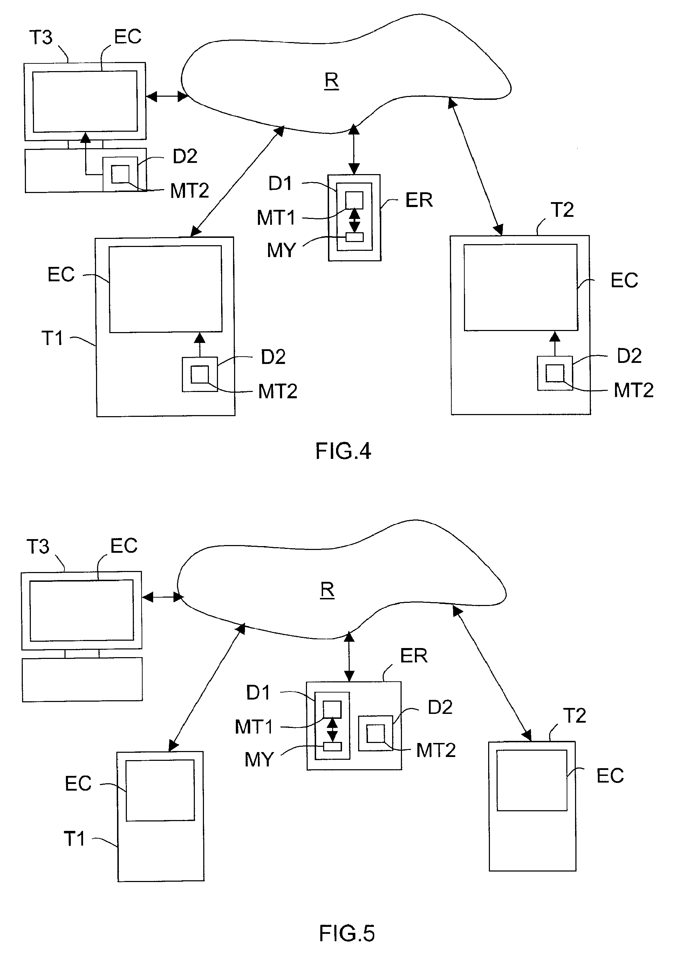

Il est important de noter que cette intégration de l'ensemble de données se fait au moyen d'un premier dispositif d'aide à l'établissement de communication D1 qui est soit implanté dans, ou couplé au, terminal T1 de l'appelant (comme c'est le cas dans l'exemple illustré sur la **figure 1**), soit implanté dans un équipement de réseau ER (comme c'est le cas dans les exemples illustrés sur les **figures 4 et 5**).

Un premier dispositif d'aide à l'établissement de communication D1, ci-après appelé premier dispositif D1, comprend un premier module de traitement MT1 chargé d'intervenir lorsqu'un terminal T1 d'un appelant a généré un message de demande d'établissement de communication avec un appelé. L'intervention consiste, comme indiqué ci-avant, à intégrer dans le message (à transmettre (**figure 1**) ou bien en cours de transmission (**figures 4 et 5**) un ensemble de données qui définit un groupe de média que le terminal T1 de l'appelant est en mesure d'utiliser pour la communication qu'il souhaite établir.

Par exemple, l'ensemble de données, qui est intégré, est agencé sous la forme d'un fichier de type XML (« eXtended Markup Language »), ce qui permet son utilisation par de très nombreuses applications.

Par ailleurs, le premier module de traitement MT1 peut intégrer l'ensemble de données en l'encapsulant, par exemple, dans des données qui identifient le terminal T1 de l'appelant et qui sont classiquement contenues dans le message de demande d'établissement. Les protocoles IP ouverts, comme par exemple SIP (« Session Initiation Protocol »), permettent l'ajout de données utilisateur du type de celles présentées ci-après. Les protocoles de type ISDN permettent également l'ajout de données utilisateur à condition de respecter un encodage spécifique et que la taille des données utilisateur soit très réduite.

Un exemple d'ensemble de données agencé sous la forme d'un fichier XML (appelé « presentation») est donné ci-dessous :

```
 <?xml version="1.0" encoding="ISO-8859-1"?>
 <presentation>
       <nom>Dupont</nom>
       <prenom>Albert</prenom>
       <societe>Alcatel</societe>
       <reponse>audio</reponse>
       <reponse>audiovideo</reponse>
       <reponse>audioinstantmessage</reponse>
       <reponse>audiovideoinstantmessage</reponse>
       <reponse>instantmessage</reponse>
       <reponse>video</reponse>
       <reponse>data</reponse>
       <reponse>excuse</reponse>
 </presentation>
```

Dans cet exemple illustratif et non limitatif, une personne dénommée « Albert Dupont », faisant partie de la société Alcatel, peut utiliser plusieurs média, à savoir un médium audio, un médium audio/vidéo, un médium de messagerie instantanée audio, un médium de messagerie instantanée audio/vidéo, un médium de messagerie instantanée, un médium vidéo et un médium de transfert de données (ou « data »).

Par ailleurs, dans cet exemple illustratif et non limitatif, le fichier XML (presentation) comprend également (ici au niveau de son avant dernière ligne) des instructions (« excuse ») qui définissent une phrase ou un espace invitant l'appelé à fournir une réponse en mode texte au terminal T1 de l'appelant. Le fichier XML transmis peut également permettre d'effectuer d'autres actions, comme par exemple envoyer un document à l'appelant. L'appelant peut en effet avoir spécifié l'objet de son appel (par exemple : <objet> est-on d'accord sur l'analyse du document X </objet> ; la réponse pouvant alors être une phrase d'excuse du type « oui c'est d'accord, et je te joins le document Y (ou X) » et l'appelant recevant la phrase d'excuse et le document Y (ou X). Parmi les autres actions, on peut également citer la mise en attente de l'appel ou le renvoi vers une messagerie vocale de l'appelé ou bien vers l'agenda électronique de l'appelé afin que ce dernier puisse convenir d'un rendez-vous.

Il est important de noter que l'ensemble de données qui est intégré dans un message de demande d'établissement, par le premier module de traitement MT1, peut être éventuellement constitué à partir d'un « sur-ensemble » contenant les données qui définissent tous les média que tous les terminaux de l'appelant peuvent utiliser de par leurs agencements respectifs. Ce sur-ensemble est par exemple constitué par l'utilisateur et stocké dans une mémoire MY qui peut faire partie du premier dispositif D1, comme illustré, ou bien de l'équipement dans lequel ce dernier est implanté.

Dans ce cas, chaque fois que le premier module de traitement MT1 doit intégrer un ensemble de données dans un message de demande d'établissement généré par un terminal T1 d'un utilisateur appelant (répertorié), il accède à la mémoire MY pour déterminer le sur-ensemble associé à cet utilisateur. Puis, il détermine auprès du terminal T1 de cet appelant chaque médium qu'il est effectivement en mesure d'utiliser pour la communication qu'il souhaite établir. Il peut alors constituer un ensemble de données à intégrer à partir du sur-ensemble, en ne sélectionnant que les média pouvant être effectivement utilisés. En d'autres termes, le premier module de traitement MT1 effectue une mise à jour de l'ensemble de données qui définit le groupe de média utilisables avant d'intégrer cet ensemble de données dans le message de demande d'établissement.

Ce type de mise à jour est avantageux, car au moment où est généré un message de demande d'établissement de communication (ou d'appel) par un terminal T1 d'un appelant, l'un au moins des média qu'il est théoriquement en mesure d'utiliser peut être déjà utilisé par une autre application. Par ailleurs, lorsqu'un appelant dispose de plusieurs terminaux, répertoriés dans son sur-ensemble, la mise à jour permet de constituer un ensemble qui ne définit que les média qui sont effectivement utilisables par le terminal T1 que cet appelant utilise pour établir une communication.

On comprendra que, lorsque le premier dispositif D1 est implanté dans un terminal T1, T2 (**figure 1**), la mémoire MY ne stocke que l'éventuel sur-ensemble qui définit tous les média que ce terminal peut utiliser. En revanche, lorsque le premier dispositif D1 est implanté dans un équipement de réseau ER (**figures 4 et 5**), la mémoire MY stocke les sur-ensembles qui définissent chacun tous les média que certains terminaux d'utilisateurs enregistrés peuvent respectivement utiliser.

Lorsque le premier dispositif D1 est implanté dans un terminal T1 d'un appelant (**figure 1**), il procède à une intégration une fois le message de demande d'établissement généré et avant que ce dernier ne soit transmis. En revanche, lorsque le premier dispositif D1 est implanté dans un équipement de réseau ER (**figures 4 et 5**), il doit intervenir pendant la phase de transmission du message de demande d'établissement, une fois qu'il est parvenu dans un équipement du réseau d'accès. L'équipement de réseau ER est donc chargé d'analyser les trafics afin de détecter les messages de demande d'établissement. A cet effet, il peut par exemple faire partie d'un (ou constituer un) serveur d'appels (« Call Server ») d'une entreprise, chargé de recevoir les requêtes des terminaux et des autres réseaux (public, privé, Internet, et analogues), d'analyser et mettre en forme les messages, et donc d'évaluer les ressources de l'appelant (terminaux et media), si bien que son premier dispositif D1 peut aisément encapsuler un fichier XML dans un message d'établissement de communication (ou message d'appel) qu'il reçoit. Un tel équipement de réseau ER remplit par exemple la fonction de soft switch.

On a représenté sur les **figures 4 et 5**, deux exemples dans lesquels un premier utilisateur dispose de deux terminaux T1 et T3, par exemple un téléphone mobile T1 et un ordinateur fixe ou portable T3, et un second utilisateur dispose d'un seul terminal T2, par exemple un téléphone mobile. Par ailleurs, dans ces deux exemples, aucun des terminaux T1 à T3 ne dispose d'un premier dispositif D1, ce dernier fonctionnant de façon centralisée dans un équipement de réseau ER.

Une fois qu'un ensemble de données a été intégré dans un message de demande d'établissement, le procédé selon l'invention se poursuit lorsque ledit message parvient à destination d'un terminal T2 de l'appelé. Plus précisément, à réception d'un message de demande d'établissement de communication le terminal T2 de l'appelé (auquel a été transmise la demande d'établissement) affiche sur son écran EC, dans une fenêtre de présentation FP, les identifiants de certains au moins des média du groupe qui est défini par l'ensemble de données contenu dans ledit message reçu. Cet affichage est géré par une application de présentation qui est implantée dans le terminal T2 de l'appelé. L'établissement de l'appel est suspendu par l'application de présentation. L'utilisateur appelé peut alors sélectionner l'un au moins des identifiants affichés au moyen de l'interface homme/machine de son terminal appelé T2, par exemple en cliquant sur l'un au moins des identifiants au moyen d'une « souris » ou d'un crayon optique, ou bien en déplaçant un curseur à l'aide de touches de fonction ou d'une manette de commande (ou « joystick »). Une fois qu'au moins un médium a été sélectionné, via son identifiant, les terminaux de l'appelant T1 et de l'appelé T2 n'ont plus qu'à s'accorder sur des paramètres de communication leur permettant d'établir une communication sur chaque médium dont l'identifiant a été sélectionné. Pour s'accorder sur des paramètres de communication, les terminaux T1 et T2 utilisent un procédé connu de négociation utilisant les messages de signalisation du protocole SIP. En cas d'accord, les flux des terminaux de l'appelant T1 et de l'appelé T2 sont connectés.

Si l'usager appelé ne sélectionne aucun médium parmi les média qui sont effectivement utilisables par le terminal T1, une temporisation, qui existe classiquement dans le réseau, indique au terminal appelant T1 que l'établissement de la communication n'a pas été possible.Tout type d'identifiant peut être utilisé, qu'il soit implicite ou explicite. Ainsi, il peut s'agir d'éléments alphanumériques, ou de mots (comme par exemple audio, vidéo ou audio/vidéo), ou d'acronymes (comme par exemple MI pour messagerie instantanée), ou encore d'abréviations (comme par exemple « doc » pour document (sous-entendu fichier de données (ou « data »))).

On notera que, lorsqu'un ensemble de données comprend, comme indiqué ci-avant, des instructions qui définissent une phrase ou un espace invitant l'appelé à fournir (au moins) une réponse en mode texte au terminal T1 de l'appelant, cette phrase ou cet espace est affiché(e) dans une partie dédiée de la fenêtre de présentation FP.

On a représenté sur la **figure 2** un premier exemple de fenêtre de présentation FP pouvant être affichée sur l'écran EC d'un terminal T2 d'un appelé. Dans ce premier exemple, les informations contenues dans la fenêtre de présentation FP (gérée par l'application de présentation) signalent à l'appelé qu'une personne appelée « Albert » (l'appelant) souhaite établir une communication sur l'un des média identifiés par les identifiants audio, audio/vidéo, MI (messagerie instantanée) et doc (transfert de document). Une zone ZS est également mise à la disposition de l'appelé pour fournir une réponse en mode texte au terminal T1 de l'appelant. La réponse, qui est optionnelle, peut être soit saisie par l'appelé au moyen de l'interface homme/machine de son terminal T2, soit sélectionnée dans une liste de messages prédéfinis, de préférence stockée dans le terminal T2. L'appelé peut donc sélectionner l'un des quatre média pour la communication demandée par Albert (l'appelant). Il peut également répondre via la zone ZS.

On a représenté sur la **figure 3** un second exemple de fenêtre de présentation FP pouvant être affichée sur l'écran EC d'un terminal T2 d'un appelé grâce à l'application de présentation. Dans ce second exemple, les informations contenues dans la fenêtre de présentation FP signalent à l'appelé qu'une personne appelée « Jacques » (l'appelant) souhaite établir une communication sur l'un au moins des média identifiés par les identifiants audio, MI (messagerie instantanée) et doc (transfert de document). Dans cet exemple, l'appelé a saisi ou sélectionné le message de réponse « Je rappelle plus tard » dans la zone ZS, ce qui signifie qu'il ne veut pas que la communication soit établie. Cette réponse est alors transmise au terminal T1 de l'appelant, et interprétée comme un refus d'établissement de communication. Par conséquent, la communication demandée par l'appelant (T1) n'est pas établie.

Chaque identifiant affiché résulte de l'interprétation ou plus simplement de la lecture des données qui définissent un médium dans un ensemble de données reçu.

Il est important de noter que cette interprétation ou lecture se fait au moyen d'un second dispositif d'aide à l'établissement de communication D2 qui est soit implanté dans, ou couplé à, un terminal T2 de l'appelé (comme c'est le cas dans les exemples illustrés sur les **figures 1** **et** **4**), soit implanté dans un équipement de réseau ER (comme c'est le cas dans l'exemple illustré sur la **figure 5**). On notera par ailleurs que le second dispositif d'aide à l'établissement de communication D2, ci-après appelé second dispositif D2, n'est pas forcément implanté dans le même équipement de réseau que celui qui comprend le premier dispositif D1. Les premier D1 et second D2 dispositifs peuvent en effet être implantés dans deux équipements de réseau totalement distincts.

Un second dispositif D2 comprend un second module de traitement MT2 chargé d'intervenir lorsqu'un terminal T2 d'un appelé a reçu un message de demande d'établissement de communication (**figures 1** **et** **4**), ou bien lorsqu'un message de demande d'établissement de communication est en cours de transmission vers un terminal T2 d'un appelé (**figure 5**).

On a représenté sur les **figures 1** **et** **4** deux exemples dans lesquels les terminaux T1 à T3 sont équipés d'un second dispositif D2. Dans l'exemple illustré sur la **figure 5**, aucun terminal T1 à T3 n'est équipé d'un second dispositif D2, ce dernier étant implanté dans un équipement de réseau ER et fonctionnant de façon centralisée.

Le second module de traitement MT2 est plus précisément chargé de déterminer les identifiants de certains au moins des média du groupe défini par l'ensemble de données qui est contenu dans un message de demande d'établissement de communication. On notera que certaines données de l'ensemble peuvent représenter directement ou indirectement les identifiants de médium. En d'autres termes, ces données peuvent constituer les identifiants ou bien elles peuvent être représentatives des identifiants. Dans ce dernier cas, le second module de traitement MT2 doit alors convertir certaines données de l'ensemble en identifiants de médium, au moyen d'une table de correspondance (ou de conversion) prévue à cet effet (et qu'il comprend).

Une fois que le second module de traitement MT2 a déterminé les identifiants de médium et les éventuelles informations complémentaires (nom de l'appelant et/ou instructions pour la réponse (zone ZS)) qui sont représentés par l'ensemble de données, il les fournit au (ou à un) terminal T2 de l'appelé afin que ce dernier puisse sélectionner l'un au moins des identifiants et/ou fournir (au moins) une réponse dans la zone ZS, pour que les terminaux de l'appelant T1 et de l'appelé T2 puissent s'accorder sur des paramètres de communication permettant d'établir une communication sur chaque médium dont l'identifiant a été sélectionné ou bien pour que la communication ne soit pas établie. En cas d'accord, les flux des terminaux de l'appelant T1 et de l'appelé T2 sont connectés.

Lorsque le second dispositif D2 est implanté dans un terminal T2 d'un appelé (**figures 1** **et** **4**), il fournit les identifiants de médium et les éventuelles informations complémentaires à l'application de présentation qui est chargée de l'affichage au sein dudit terminal T2 de l'appelé afin qu'elle se charge de les afficher dans la fenêtre de présentation FP. En revanche, lorsque le second dispositif D2 est implanté dans un équipement de réseau ER (figure 5), il doit transmettre au terminal appelé T2, sensiblement en même temps que le message de demande d'établissement de communication, les identifiants de médium et les éventuelles informations complémentaires afin que son application en charge de l'affichage les affiche dans la fenêtre de présentation FP. Le fichier XML est de préférence contenu dans le message d'appel (ou demande d'établissement de communication), qui est reçu par l'équipement de réseau ER. Ce dernier analyse le message d'appel, puis il le route vers au moins un terminal de l'appelé, en fonction des préférences de ce dernier (celui-ci a peut-être choisi de distribuer ses appels vers un terminal particulier ou vers plusieurs de ses terminaux).

L'établissement de l'appel est suspendu par l'application de présentation qui est chargée de l'affichage au sein du terminal T2 de l'appelé. Le message d'établissement de chaque médium n'a lieu qu'une fois que l'appelé a effectué son choix (ou sa sélection).

On notera que le second module de traitement MT2 peut ne fournir à l'application d'affichage qu'une partie des identifiants des média du groupe défini par l'ensemble de données qui est contenu dans un message de demande d'établissement de communication. En effet, on peut envisager que le second module de traitement MT2 soit agencé de manière à déterminer les média que le terminal T2 de l'appelé (auquel est transmise la demande d'établissement) est en mesure d'utiliser pour la communication à établir. Cela peut éviter d'avoir à gérer des situations dans lesquelles l'utilisateur d'un terminal T2 (appelé) sélectionne un médium alors que celui-ci n'est pas utilisable par ce terminal T2 au moment où le message est reçu ou bien que ledit terminal T2 n'est pas agencé pour l'utiliser. Dans ces situations, il faudrait adresser à l'utilisateur un message lui indiquant que le médium sélectionné n'est pas utilisable et qu'il doit en sélectionner un autre (sans garantie que cet autre médium sélectionné soit utilisable).

Par conséquent, une fois que le second module de traitement MT2 a déterminé les média de l'appelé qui peuvent être effectivement utilisés par le terminal T2 de l'appelé, il les compare aux média de l'appelant (qui sont désignés par les données de l'ensemble) et ne retient que les média de l'appelant qui sont identiques aux média utilisables de l'appelé. Il ne fournit alors au terminal T2 de l'appelé que les identifiants des média qu'il est effectivement en mesure d'utiliser. Il peut également fournir au terminal T2 tous les identifiants des média et lui demander de les afficher en signalant ceux qui sont disponibles (ou indisponibles).

Dans une variante, on peut envisager que l'application de présentation du terminal T2 de l'appelé soit agencée pour déterminer les ressources disponibles dans ledit terminal T2. Dans ce cas, c'est de préférence cette application de présentation qui, lorsqu'elle reçoit l'ensemble de données qui est contenu dans un message de demande d'établissement de communication (ou demande d'appel), va signaler à l'appelé quels sont, parmi les média désignés par cet ensemble, ceux qui sont disponibles, par exemple en grisant ou soulignant les média non utilisables (ou bien utilisables) ou en n'affichant que les média disponibles. On notera que l'on peut éventuellement laisser la possibilité à l'appelé de cesser d'utiliser un médium déjà utilisé par une autre communication afin qu'il puisse servir pour la communication demandée, cette autre communication étant alors mise en garde (ou interrompue) avec tous ses média.

Ainsi, on est sûr que l'appelé va sélectionner au moins un médium parmi des média que son terminal T2 est en mesure d'utiliser au moment de la réception du message de demande d'établissement de communication.

On notera que si ni le terminal T2 de l'appelé ni l'ensemble de réseaux R ne dispose d'un équipement de réseau comprenant un second dispositif D2, alors l'ensemble de données contenu dans un message de demande d'établissement de communication ne peut pas être traité par le terminal T2 de l'appelé. Dans ce cas, cet ensemble est ignoré et la communication est présentée sur le médium utilisé par le terminal T1 de l'appelant pour transmettre son message.

On notera également que si un utilisateur appelé dispose de plusieurs terminaux (T1 et T3), un message de demande d'établissement de communication qui est destiné à l'un de ses terminaux peut être également transmis à au moins un autre de ses terminaux. Dans ce cas, le nombre de média effectivement utilisables par l'utilisateur appelé, parmi ceux proposés par l'utilisateur appelant, peut être plus grand. Egalement dans ce cas, il est avantageux d'utiliser un dispositif central, par exemple implanté dans l'équipement de réseau ER, chargé de régir les états respectifs des terminaux des différents utilisateurs enregistrés (c'est-à-dire les média qu'ils utilisent à un instant donné).

Le premier dispositif D1 et/ou le second dispositif D2, selon l'invention, peu(ven)t être réalisé(s) sous la forme de circuits électroniques, de modules logiciels (ou informatiques), ou d'une combinaison de circuits et de logiciels.

L'invention ne se limite pas aux modes de réalisation décrits ci-avant, seulement à titre d'exemple, mais elle englobe toutes les variantes que pourra envisager l'homme de l'art dans le cadre des revendications ci-après. En particulier, l'appelant peut disposer de plusieurs terminaux et l'appelé peut disposer de plusieurs terminaux.

## Revendications

1. Procédé d'établissement d'une communication entre des terminaux de communication d'un appelant (T1) et d'un appelé (T2), ledit procédé consistant à générer dans un terminal (T1) d'un appelant un message de demande d'établissement d'une communication avec un appelé, en intégrant dans ledit message un ensemble de données définissant un groupe de média que l'appelant peut utiliser au moment de cette demande d'établissement de communication,
puis à transmettre ce message à destination dudit appelé afin qu'un terminal (T1) de l'appelant et un terminal (T2) dudit appelé s'accordent sur des paramètres de communication permettant d'établir une communication sur au moins un médium, **caractérisé**
- **en ce que** l'on intègre dans ledit message de demande d'établissement des données correspondant seulement à des média que l'appelant est en mesure d'utiliser au moment de cette demande d'établissement de communication,
- **en ce qu'**à réception dudit message un terminal (T2) de l'appelé affiche sur un écran (EC) des identifiants de certains au moins des média du groupe défini par ledit ensemble de données,
- **en ce que** ledit appelé procède à la sélection de l'un au moins desdits identifiants,
- et **en ce qu'**on suspend l'établissement de ladite communication jusqu'à ce que ledit appelé ait procédé à cette sélection et qu'un terminal de l'appelant (T1) et un terminal de l'appelé (T2) se soient accordés sur des paramètres de communication permettant d'établir une communication sur chaque médium dont l'identifiant a été sélectionné.

2. Procédé selon la revendication 1, **caractérisé en ce qu'** on met à jour le groupe de média qu'un terminal (T1) de l'appelant est en mesure d'utiliser, juste avant d'intégrer dans ledit message de demande d'établissement l'ensemble de données définissant le groupe mis à jour.

3. Procédé selon l'une des revendications 1 et 2, **caractérisé en ce que** l'on détermine les média que l'appelé est en mesure d'utiliser pour la communication à établir, et **en ce qu'**on lui signale sur un écran (EC) les identifiants des média que l'appelé est en mesure d'utiliser parmi ceux du groupe défini par ledit ensemble de données contenu dans ledit message de demande d'établissement.

4. Procédé selon l'une des revendications 1 à 3, **caractérisé en ce qu'**on intègre dans ledit message de demande d'établissement un ensemble de données agencé sous la forme d'un fichier de type XML.

5. Procédé selon l'une des revendications 1 à 4, **caractérisé en ce qu'**on intègre ledit ensemble de données en l'encapsulant dans des données identifiant un terminal (T1) de l'appelant et contenues dans ledit message de demande d'établissement.

6. Procédé selon l'une des revendications 1 à 5, **caractérisé en ce qu'**on intègre un ensemble de données comprenant des instructions définissant une phrase ou un espace destiné(e) à être affiché(e) sur l'écran (EC) d'un terminal (T2) de l'appelé et invitant ledit appelé à fournir au moins une réponse en mode texte à un terminal (T1) de l'appelant.

7. Procédé selon la revendication 6, **caractérisé en ce qu'**en cas de fourniture d'une réponse signalant l'impossibilité d'établir la communication demandée, ladite réponse est transmise à un terminal (T1) de l'appelant et la communication n'est pas établie.

8. Dispositif (D1) d'aide à l'établissement d'une communication entre des terminaux de communication d'un appelant (T1) et d'un appelé (T2), comprenant des premiers moyens de traitement (MT1) pour intégrer dans un message de demande d'établissement de communication un ensemble de données définissant un groupe de média que l'appelant peut utiliser pour l'établissement d'une communication entre un terminal de l'appelant (T1) et un terminal de l'appelé (T2) ;
**caractérisé en ce que** ces premiers moyens de traitement (MT1) déterminent ledit ensemble de données au moment de la demande d'établissement de communication, de façon à permettre à l'appelé de sélectionner au moins un médium en limitant son choix aux média effectivement disponibles au moment de la demande d'établissement de communication,

9. Dispositif selon la revendication 8, **caractérisé en ce que** lesdits premiers moyens de traitement (MT1) sont agencés pour mettre à jour le groupe de média qu'un terminal (T1) de l'appelant est en mesure d'utiliser, juste avant d'intégrer, dans ledit message de demande d'établissement, l'ensemble de données qui définit le groupe mis à jour.

10. Dispositif selon l'une des revendications 8 et 9, **caractérisé en ce que** lesdits premiers moyens de traitement (MT1) sont agencés pour intégrer dans ledit message de demande d'établissement un ensemble de données agencé sous la forme d'un fichier de type XML.

11. Dispositif selon l'une des revendications 8 à 10, **caractérisé en ce que** lesdits premiers moyens de traitement (MT1) sont agencés pour intégrer ledit ensemble de données par encapsulation dans des données qui identifient un terminal (T1) de l'appelant et qui sont contenues dans ledit message de demande d'établissement.

12. Dispositif selon l'une des revendications 8 à 11, **caractérisé en ce que** lesdits premiers moyens de traitement (MT1) sont agencés pour intégrer dans ledit message de demande d'établissement un ensemble de données comprenant des instructions définissant une phrase ou un espace invitant l'appelé à fournir au moins une réponse en mode texte à un terminal (T1) de l'appelant.

13. Dispositif (D2) d'aide à l'établissement d'une communication entre des terminaux de communication d'un appelant (T1) et d'un appelé (T2), comprenant des seconds moyens de traitement (MT2) agencés pour recevoir un message de demande d'établissement d'une communication, ce message contenant un ensemble de données définissant un groupe de média que l'appelant peut utiliser ;
**caractérisé en ce que** ces seconds moyens de traitement (MT2) sont agencés pour:
- déterminer des identifiants de certains au moins des média du groupe défini par ledit ensemble de données,
- puis fournir certains au moins desdits identifiants déterminés à un terminal (T2) de l'appelé, afin que ledit appelé sélectionne l'un au moins d'entre eux,
- et suspendre l'établissement de ladite communication jusqu'à ce que ledit appelé ait procédé à cette sélection, et qu'un terminal de l'appelant (T1) et un terminal de l'appelé (T2) se soient accordés sur des paramètres de communication permettant d'établir une communication sur chaque médium dont l'identifiant a été sélectionné.

14. Dispositif selon la revendication 13, **caractérisé en ce que** lesdits seconds moyens de traitement (MT2) sont agencés pour déterminer les média que l'appelé est en mesure d'utiliser pour la communication à établir, parmi ceux du groupe défini par ledit ensemble de données contenu dans ledit message de demande d'établissement.

15. Terminal de communication (UE), **caractérisé en ce qu'**il comprend un dispositif d'aide à l'établissement de communication (D1) selon l'une des revendications 8 à 12 et/ou un dispositif d'aide à l'établissement de communication (D2) selon l'une des revendications 13 et 14.

16. Equipement (EQ) de réseau de communication, **caractérisé en ce qu'**il comprend un dispositif d'aide à l'établissement de communication (D1) selon l'une des revendications 8 à 12 et/ou un dispositif d'aide à l'établissement de communication (D2) selon l'une des revendications 13 et 14.
